# EUROPEAN PATENT APPLICATION

(11) **EP 4 478 469 A1**
(43) Date of publication of application: **18.12.2024**
(21) Application number: 24182170.1
(22) Date of filing: 14.06.2024
(51) Int. Cl.: H01M 10/04, H01M 10/0525, H01M 10/056, H01M 10/0583, H01M 50/414, H01M 50/431, H01M 50/446, H01M 50/466

(54) **LITHIUM-ION BATTERY**

(30) Priority: 14.06.2023 CN 202310703881
(71) Applicant: Hon Hai Precision Industry Co., Ltd., New Taipei City (TW); SolidEdge Solution Inc., Hsinchu 300 (TW)
(72) Inventor: LAI, HSIU-LING, 300 Hsinchu (TW); CHANG, CHIH-CHING, 300 Hsinchu (TW); LAI, HONG-ZHENG, 300 Hsinchu (TW); CHANG, TSENG-LUNG, 300 Hsinchu (TW)
(74) Representative: Zaboliene, Reda

(57) **Abstract**

A lithium-ion battery comprises a positive electrode sheet, a composite solid electrolyte membrane and a negative electrode sheet stacked with other in that sequence. The composite solid electrolyte membrane is a continuous membrane structure and comprises a first part of composite solid electrolyte membrane and a second part of composite solid electrolyte membrane. The first part of composite solid electrolyte membrane is stacked and parallel with the at least one positive electrode sheet and the at least one negative electrode sheet. The second part of composite solid electrolyte membrane is located on a side surface of the lithium-ion battery.

## Description

### CROSS-REFERENCE TO RELATED APPLICATIONS

This application claims all benefits from China Patent Application No. 202310703881.2, filed on June 14, 2023, in the China Intellectual Property Office, the contents of which are hereby incorporated by reference.

### FIELD

The present disclosure relates to a lithium-ion battery.

### BACKGROUND

In the current preparation process of lithium-ion batteries, the solid electrolyte is in a fluid state and can be formed on a surface of an electrode sheet by injecting or coating method. A coating machine is required for flow control, and the preparation process is complex and difficult to Control the process.

A conventional lithium-ion battery is composed of a positive electrode sheet, a negative electrode sheet and a separator. In the prior art, stacking equipment is often used to stack the positive electrode sheet, the negative electrode sheet, and the separator alternately in the positioning space, and there is no surface bonding preparation process between the them. During the stacking process, it is easy to cause wrinkles in the separator, causing the battery to precipitate lithium during the charging and discharging process, which produces lithium dendrites and causes safety accidents. At the same time, during the stacking process, the positive electrode sheet, the negative electrode sheet, and the separator need to be accurately aligned, which requires high dimensional accuracy. At the same time, the prepared lithium-ion battery is prone to interference with the packaging aluminum foil.

### BRIEF DESCRIPTION OF THE DRAWINGS

Implementations of the present technology will now be described, by way of example only, with reference to the attached figures, wherein:
FIG. 1 is a schematic diagram of a relative position of a positive electrode composite structure provided by an embodiment of the present disclosure.
FIG. 2 is a schematic diagram of transition dimensions of a positive electrode composite structure provided by an embodiment of the present disclosure.
FIG. 3 is a schematic view from a non-tab side of a lithium-ion battery preform formed by stacking a first composite structure and a second composite structure according to an embodiment of the present disclosure.
FIG. 4 is a schematic view from a tab side of a lithium-ion battery preform formed by stacking a first composite structure and a second composite structure according to an embodiment of the present disclosure.
Figure 5 is a preparation flow chart from non-tab side for pressing, trimming, shaping and fixing the lithium-ion battery preform provided by one embodiment of the present disclosure
FIG. 6 is a preparation flow chart from tab side for pressing, trimming, shaping and fixing the battery preform according to an embodiment of the present disclosure.
Figure 7 is a schematic diagram of a completed lithium-ion battery provided by an embodiment of the present disclosure.
FIG. 8 is a schematic cross-sectional view of a lithium-ion battery provided by an embodiment of the present disclosure.
FIG. 9 is a schematic diagram of a completed lithium-ion battery comprising a plurality of positive electrode composite structures and a plurality of negative electrode composite structures provided by an embodiment of the present disclosure.
FIG. 10 is a schematic cross-sectional view of a lithium-ion battery comprising a plurality of positive electrode composite structures and a plurality of negative electrode composite structures according to an embodiment of the present disclosure.

### DETAILED DESCRIPTION

The disclosure is illustrated by way of example and not by way of limitation in the figures of the accompanying drawings in which like references indicate similar elements. It should be noted that references to "another," "an," or "one" embodiment in this disclosure are not necessarily to the same embodiment, and such references mean "at least one."

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. Also, the description is not to be considered as limiting the scope of the embodiments described herein. The drawings are not necessarily to scale, and the proportions of certain parts have been exaggerated to better illustrate details and features of the present disclosure.

Several definitions that apply throughout this disclosure will now be presented.

The term "substantially" is defined to be essentially conforming to the particular dimension, shape, or other feature which is described, such that the component need not be exactly or strictly conforming to such a feature. The term "comprise," when utilized, means "comprise, but not necessarily limited to"; it specifically indicates open-ended inclusion or membership in the so-described combination, group, series, and the like.

One embodiment of the present disclosure provides a method for preparing a lithium-ion battery, which comprises the following steps:
S1, providing a positive electrode sheet 10 and two composite solid electrolyte membranes 3, and applying the positive electrode sheet 10 between the two composite solid electrolyte membranes 3 to form a positive electrode composite structure 11;
S2, providing a negative electrode sheet 20 and two composite solid electrolyte membranes 3, applying the negative electrode sheet 20 between the two composite solid electrolyte membranes 3 to form a negative electrode composite structure 12;
S3, stacking at least one positive electrode composite structure 11 and at least one negative electrode composite structure 12 to form a battery preform 4;
S4, pressing the battery preform 4, and the composite solid electrolyte membranes 3 in the battery preform 4 is trimmed, shaped, and fixed to obtain the lithium-ion battery.

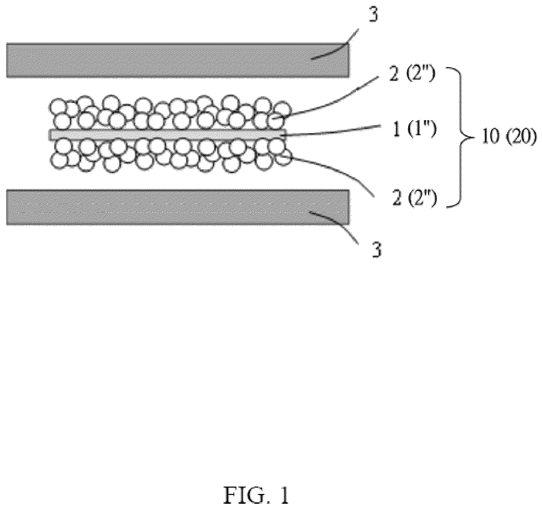

In step S1, the positive electrode sheet 10 comprises a positive electrode current collector 1 and two positive electrode material layers 2. The two positive electrode material layers 2 are separately disposed on two opposite surfaces of the positive electrode current collector 1, as shown in FIG. 1. The positive electrode current collector 1 is a metal foil sheet, such as an aluminum sheet, a copper sheet, etc. The positive electrode material layer 2 comprises a positive electrode material, which can be an existing commonly used positive electrode material. The positive electrode material can be at least one of a lithium-transition metal oxide with a layered structure, a lithium-transition metal oxide with a spinel structure, and a lithium-transition metal oxide with an olivine structure. The positive electrode material can be at least one selected from olivine Type lithium iron phosphate, layered structure lithium cobalt oxide, layered structure lithium manganate, spinel type lithium manganate, lithium nickel manganese oxide and lithium nickel cobalt manganese oxide. The positive electrode material layer 2 can further comprise a conductive agent and a binder, which can be binders and conductive agents commonly used in the prior art. The positive electrode material layer 2 is formed on the positive electrode current collector by slurry coating.

In step S1, the composite solid electrolyte membrane 3 is laminated and disposed on the surface of the positive electrode material layer 2 away from the positive electrode current collector 1 through a hot pressing process. The composite solid electrolyte membrane 3 is a formed layered structure, which means that the composite solid electrolyte membrane 3 is already an independent layered structure before it is formed on the positive electrode material layer 2. The composite solid electrolyte membrane 3 can be directly laid flat. It is obtained by placing the paint of the composite solid electrolyte membrane 3 on the surface of the positive electrode material layer 2 and then drying it, instead of by coating or other methods.

In step S1, the composite solid electrolyte membrane 3 comprises polymer materials and inorganic solid electrolytes. Furthermore, the composite solid electrolyte membrane 3 can be a composite membrane composed of polymer materials and inorganic solid electrolytes. The polymer material can be polyvinylidene fluoride, polymethyl methacrylate, polyethylene oxide, etc. The polymer material can be softened by heating, causing local softening on the surface, and has surface microviscosity and thermoplasticity. Therefore, the polymer material can also improve the ductility and toughness of the composite solid electrolyte membrane 3. The inorganic solid electrolyte can be lithium lanthanum zirconium oxide, lithium aluminum titanium phosphate, lithium lanthanum titanium oxide, etc. The inorganic solid electrolyte can improve ionic conductivity, avoid puncture of lithium dendrites, and at the same time improve the mechanical strength of the composite solid electrolyte membrane 3. After the composite solid electrolyte membrane 3 is heated, the surface of the composite solid electrolyte membrane 3 has micro plasticity and surface micro viscosity. When the composite solid electrolyte membrane 3 and the positive electrode material layer 2 continue to be pressed together, the composite solid electrolyte membrane 3 and the positive electrode material layer 2 have transitional dimensions. In the bonded state, a better bonding effect can be achieved without damaging the surface morphology of the positive electrode material layer 2 and maintaining the material properties. At the same time, the composite solid electrolyte membrane 3 can be shaped after cooling, which is beneficial to subsequent manufacturing operations. Preferably, a thickness of the composite solid electrolyte membrane 3 can be ranged from 5 microns to 100 microns.

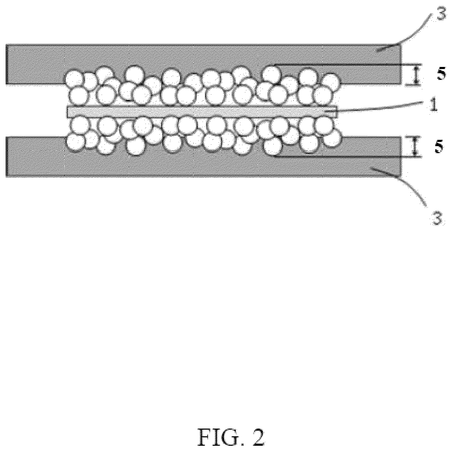

Referring to FIG. 2, during the hot pressing process of the composite solid electrolyte membrane 3 and the positive electrode material layer 2, a transition layer 5 is formed between the composite solid electrolyte membrane 3 and the positive electrode material layer 2. The transition layer 5 is an uneven surface staggered interval structure formed by fitting the contact portions of the composite solid electrolyte membrane 3 and the positive electrode material layer 2 with each other after the composite solid electrolyte membrane 3 is heated.

In the process of hot pressing the composite solid electrolyte membrane 3 and the positive electrode material layer 2, in order to ensure that the composite solid electrolyte membrane 3 and its adjacent positive electrode material layer 2 have a good bonding effect, a thickness of the transition layer is ranged from 0.1 microns to 5.0 microns. When the thickness of the transition layer 5 is less than 0.1 micron, because the interval of the transition layer 5 is too thin, during the subsequent hot pressing process of the battery preform 4, the composite solid electrolyte membrane 3 and its adjacent positive electrode sheet 10 or the negative electrode sheet 20 cannot achieve good bonding, resulting in poor bonding and peeling. When the thickness of the transition layer 5 is greater than 5.0 microns, since the thickness of the transition layer 5 is too thick, the function of insulation protection is compressed, and the positive and negative electrodes are prone to internal short circuits, which affects the safety of the lithium-ion battery. Specifically, the hot pressing process can be performed by a flat pressing device. In this embodiment, a hot pressing temperature is ranged from 50°C to 250°C, a pressing speed is about 0.1µm/second, a fixed output force is ranged from 0.01Kg/cm² to 20.0Kg/cm², and a movement time of a single pressing process is controlled at within 10 seconds. It can be understood that, the thickness of the positive electrode composite structure 11 formed by the positive electrode sheet 10 and the composite solid electrolyte membrane 3 can be obtained by controlling the hot pressing temperature, predetermined force and pressing time. To further explain, the pressing speed can be pressurization at a constant speed, or pressurization at a non-constant speed, for example, decelerating the pressurization from fast to slow.

In one embodiment, the thickness of the transition layer 5 is ranged from 0.1 microns to 5.0 microns. This thickness range can make the electrode sheets adjacent to the composite solid electrolyte membrane 3 have good surface morphology, and also ensure that the composite solid electrolyte membrane 3 and its adjacent electrode sheet are well adhered, so that the formed electrode sheet and the composite solid electrolyte membrane have good cycle performance.

In step S2, the negative electrode sheet 20 comprises a negative electrode current collector 1" and two negative electrode material layers 2' separately disposed on two opposite surfaces of the negative electrode current collector 1". The negative electrode material layer 2" comprises a negative electrode material, the negative electrode material is an existing commonly used negative electrode material. The negative electrode material can be a carbon material, such as graphite; or it can also be a non-carbon material, such as a silicon-carbon composite material. The negative electrode material layer can further comprise a conductive agent and a binder, which can be binders and conductive agents commonly used in the prior art.

The composite solid electrolyte membrane 3 is disposed on the surface of the negative electrode sheet 20 to prepare the negative electrode composite structure 12. Specifically, the composite solid electrolyte membrane 3 is hot pressed and laminated on the negative electrode material layer 2" away from the negative electrode current collector 1" assembly. The preparation method of the negative electrode composite structure 12 is the same as the preparation method of the positive electrode composite structure 11, except that the positive electrode sheet 10 is replaced by the negative electrode sheet 20.

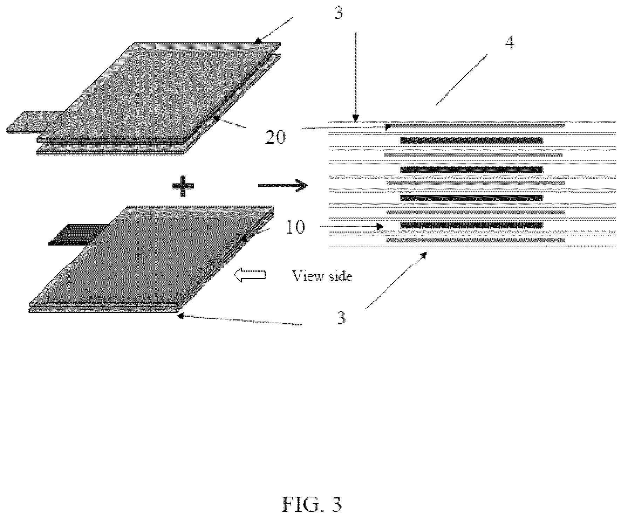

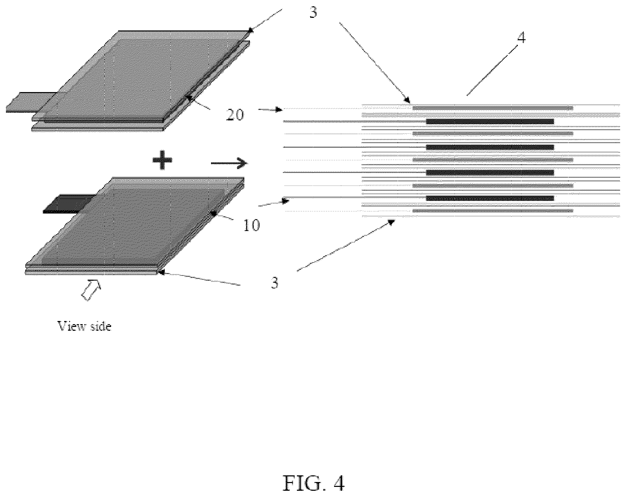

In step S3, at least one positive electrode composite structure 11 and at least one negative electrode composite structure 12 are stacked to form a battery prefabricated body 4. Please refer to FIGS. 3-4 for battery prefabrication schematic diagram of the structure of body prefabricated 4 from the right side perspective and the front side perspective. The number of the positive electrode composite structure 11 and the negative electrode composite structure 12 contained in the battery preform 4 can be selected according to actual needs. The composite solid electrolyte membrane 3 is configured to insulate and separate the positive electrode sheet 10 and the negative electrode sheet 20. The area of the composite solid electrolyte membrane 3 is larger than the area of the positive electrode sheet 10 or the negative electrode sheet 20, that is, the composite solid electrolyte membrane 3 can completely cover the positive electrode sheet 10 or the negative electrode sheet 20. This ensures that when the position of the positive electrode sheet 10 or the negative electrode sheet 20 is shifted, the composite solid electrolyte membrane 3 can still isolate the positive electrode sheet 10 and the negative electrode sheet 20. At the same time, since an area of the composite solid electrolyte membrane 3 is larger than an area of the positive electrode sheet 10 or the negative electrode sheet 20, the composite solid electrolyte membrane 3 does not need to be aligned with the positive electrode sheet 10 or the negative electrode sheet 20, as long as it is ensured that the positive electrode sheet 10 and the negative electrode sheet 20 in the battery preform 4 are insulated, and there is at least one composite solid electrolyte membrane 3 between the positive electrode sheet 10 and the negative electrode sheet 20. That is, when the at least one positive electrode composite structure 11 and at least one negative electrode composite structure 12 are stacked, one of the two composite solid electrolyte membranes 3 in the positive electrode composite structure 11 or the negative electrode composite structure 12 can be removed, so that, there is only one composite solid electrolyte membrane 3 between the positive electrode sheet 10 and the negative electrode sheet 20. Therefore, it can be understood that before step S3, the preparation method can further comprise a step of removing the composite solid electrolyte membrane 3 in the at least one positive electrode composite structure 11 or the at least one negative electrode composite structure 12. The position of the removed composite solid electrolyte membrane 3 can be selected according to actual needs, as long as the insulation between the positive electrode sheet 10 and the negative electrode sheet 20 in the battery preform 4 is ensured.

In one embodiment, the battery preform 4 comprises one positive electrode composite structure 11 and one negative electrode composite structure 12 stacked with each other.

In another embodiment, the battery preform 4 comprises a plurality of positive electrode composite structures 11 and a plurality of negative electrode composite structures 12, and the plurality of positive electrode composite structures 11 and a plurality of negative electrode composite structures 12 are alternately stacked with each other.

In step S4, during the pressing process of the battery preform 4, the battery preform 4 is placed horizontally, and pressure is applied to the battery preform 4 in the vertical direction. The applied pressure is perpendicular to the surface of the battery preform 4, an upper surface and a lower surface of the battery preform 4 can always remain horizontally during the pressing process. Since the area of the composite solid electrolyte membrane 3 in the battery preform 4 is different from that of the positive electrode sheet 10 or the negative electrode sheet 20, the composite solid electrolyte membrane 3 protrudes beyond the positive electrode sheet 10 or the negative electrode sheet 20. After pressing, the side edges of the battery preform 4 are still uneven. The edge shaping and fixing of the battery preform 4 is to fold the uneven side edges of the battery preform 4 in a unified direction to keep the side edges neat and at the same time fix the folded structure of the battery preform 4, thereby obtaining a battery with neat side edges and stable structure. The uneven side edges of the battery preform 4 refer to the composite solid electrolyte membrane 3 protruding from the positive electrode sheet 10 or the negative electrode sheet 20.

The processes of pressing, trimming, shaping and fixing the battery preform 4 can all be completed by a battery forming device 6. The battery forming device 6 comprises an upper platform 61, a lower platform 62, a side edge pressing plate 63, and a lower folding plate 64. The upper platform 61 and the lower platform 62 are spaced apart and used to provide pressure for pressing the battery preform 4. The side edge pressing plate 63 and the lower edge folding plate 64 are used to trim and shape the side edges of the battery preform 4. After trimming and shaping the battery preform 4, the battery forming device 6 can further glue and fix the battery preform 4, so that the structure after folding the side edges remains stable and not deformed.

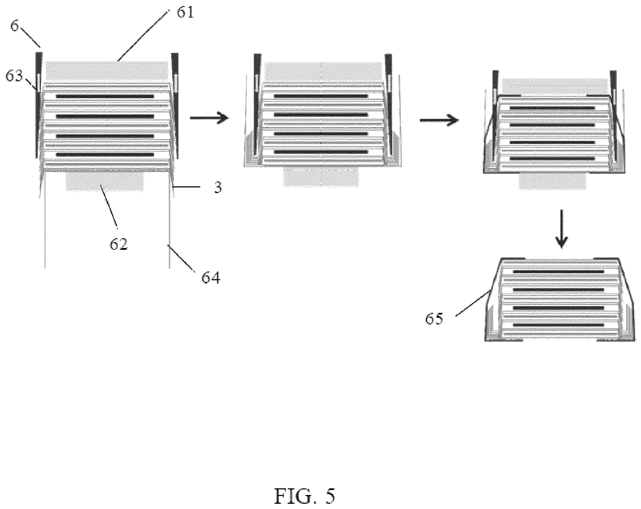

The steps of using the battery forming device 6 to press, trim, shape and fix the battery preform 4 can comprise the steps:
S41, the battery preform 4 is positioned, placed, and clamped and fixed. Referring to FIG. 5, the battery preform 4 is placed horizontally on the lower platform 62 of the battery forming device 6, and the upper platform 61 moves downward to clamp and fix the battery preform 4. In order to ensure that the battery preform 4 is flat, the pressure is controlled less than 5000kg/cm². This pressure range can fix the position of the battery preform 4 and at the same time provide the function of flattening the battery preform 4.
S42, the side edge pressing plate 63 moves vertically downward, and folds the side edge structure of the battery preform 4 downward; the lower edge folding plate 64 rotates upward, and folds the side edge structure upward until it is attached again to the side edge of the battery preform 4. As shown in FIG. 5, the side edge pressing plate 63 moves vertically downward from above the battery preform 4 to collect the composite solid electrolyte membrane 3 protruding from the positive electrode sheet 10 or the negative electrode sheet 20 downward. The side edge pressing plate 63 has a tapered design, and the collection process will not cause damage to the composite solid electrolyte membrane 3. Furthermore, a surface of the side edge pressing plate 63 has an antistatic component, which will not cause stickiness to the surface of the polymer composite solid electrolyte membrane. When the lower flange plate 64 rotates, it rotates upward with the lower edge of the battery preform 4 as the center of the circle until it forms a perpendicular angle with the horizontal direction of the battery preform 4 and then stops fixed. At this time, the side edge portion collected by the side edge pressing plate 63 is folded and attached to the side edge of the battery preform 4. The lower folding plate 64 folds the composite solid electrolyte membrane 3 upward to restrict the composite solid electrolyte membrane 3 in the side area of the battery preform 4, so that the composite solid electrolyte membrane 3 will not interfere with the upper and lower surfaces of the battery preform 4.

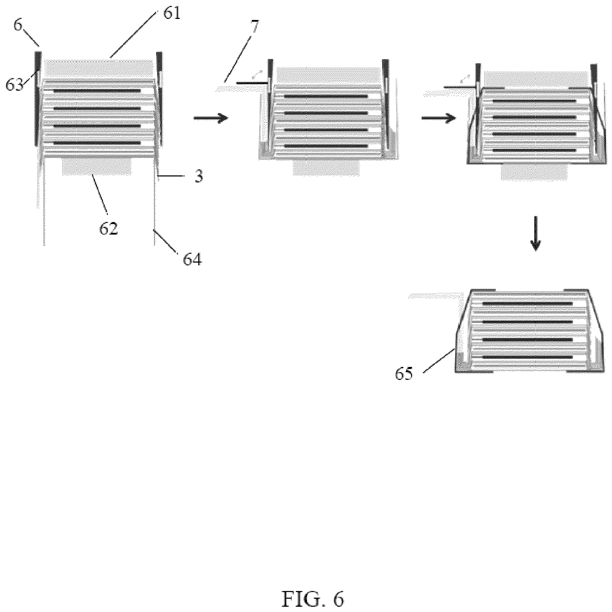

Further, please refer to FIGS. 6-7, when the battery preform 4 is provided with electrode tabs 7, since the electrode tabs 7 are also provided in the side area of the battery preform 4, therefore, in when folding, it is necessary to consider the thickness difference of the electrode tabs 7, and design the size of the folding plate according to the position of the tabs to ensure the safety and aesthetics of subsequent battery packaging.

The side edge pressing plate and the lower edge folding plate of the present invention can be produced in the required size and shape according to the size and shape of the battery. The purpose is to close the composite solid electrolyte membrane 3 with protruding dimensions, so as to achieve aims that the volumetric energy density can be increased without wasting the internal space of the battery. This embodiment uses a prismatic battery for implementation description, but is not limited to use on prismatic batteries.

In step S43, the battery preform 4 is glued and fixed. The battery forming device 6 can further comprise a rubber supply wheel and a rubber applying clamp (not shown). When the battery forming device 6 is sealing and attaching, the rubber wheel is used to feed glue and automatically cut to a specified length, and then the glue application clamping claws clamp the sealing structure 65 on the battery. The lower slot of the battery preform 4 is positioned and attached. After the lower glue is completed, the glue clamp continues to move upward to the fixed length position, and the glue clamp is pressed down to complete the glue. Once one dispensing point is completed in this way, the cycle will be repeated for the remaining dispensing points until all dispensing points are completed.

In the preparation method of lithium-ion batterys provided by this disclosure, the composite solid electrolyte membrane 3 can be directly laminated and pressed with the positive electrode sheet 10 and the negative electrode sheet 20 to form a lithium-ion battery 100, without any need of precisely aligning the composite solid electrolyte membrane 3 with the positive electrode sheet 10 and the negative electrode sheet 20. The preparation method of lithium-ion battery allows for large dimensional errors. The preparation method of lithium-ion battery is simple, easy to control the process, and is suitable for industrial production.

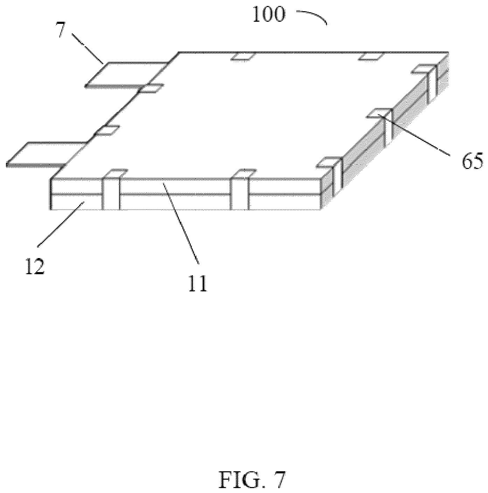

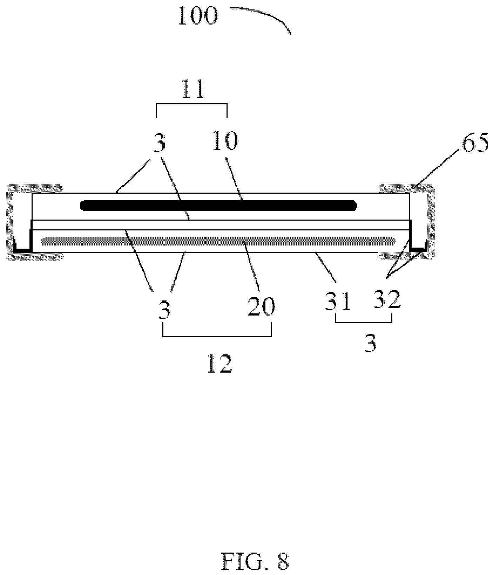

Please refer to FIG. 7 and FIG. 8 together, another embodiment of the present disclosure provides a lithium-ion battery 100. The lithium-ion battery 100 comprises the positive electrode composite structure 11 and the negative electrode composite structure 12 in the above embodiments. The positive electrode composite structure 11 and the negative electrode composite structure 12 are stacked. The positive electrode composite structure 11 comprises a positive electrode sheet 10 and two composite solid electrolyte membranes 3 separately disposed on two opposite surfaces of the positive electrode sheet 10. The negative electrode composite structure 12 comprises a negative electrode sheet 20 and two composite solid electrolyte membranes 3 separately disposed on two opposite surfaces of the negative electrode sheet 20. The composite solid electrolyte membrane 3 is a continuous membrane structure and is divided into two parts. A first part of composite solid electrolyte membrane 31 is located between the positive electrode sheet 10 and the negative electrode sheet 20 and is arranged parallel to the positive electrode sheet 10 and the negative electrode sheet 20. A second part of composite solid electrolyte membrane 32 is folded on the lithium-ion battery 100 side.

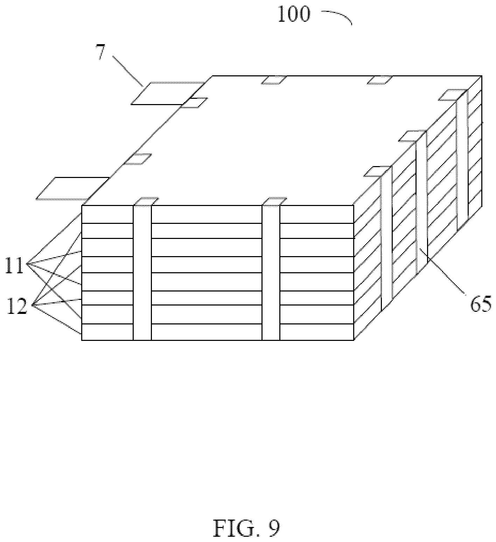

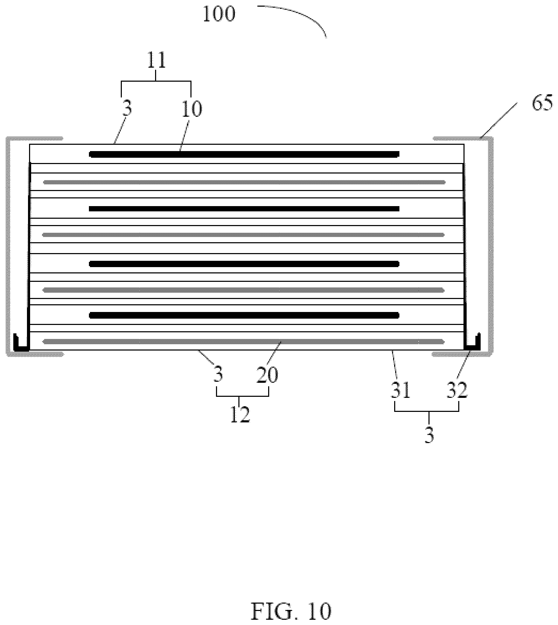

Referring to FIGS. 9 and 10, in one embodiment, the lithium-ion battery 100 comprises a plurality of positive electrode composite structures 11 and a plurality of negative electrode composite structures 12. The plurality of positive electrode composite structures 11 and the plurality of negative electrode composite structures 12 are stacked at intervals. Specifically, the lithium-ion battery 100 comprises N positive electrode composite structures 11 and N negative electrode composite structures 12, where N ≥ 2, N can be 2, 3, 4, 5, 6, etc. It can be understood that the value of N is a positive integer with no upper limit, and the value of N can be set according to the structural size of the lithium-ion battery 100.

The composite solid electrolyte membrane 3 is provided on both surfaces of the positive electrode sheet 10 and the negative electrode sheet 20. The area of the composite solid electrolyte membrane 3 is larger than the area of the positive electrode sheet 10 or the negative electrode sheet 20, that is, the composite solid electrolyte membrane 3 can completely cover the positive electrode sheet 10 or the negative electrode sheet 20. When the composite solid electrolyte membrane 3 is pressed and stacked with the positive electrode sheet 10 and the negative electrode sheet 20, the overlapping portion of the composite solid electrolyte membrane 3 with the positive electrode sheet 10 or the negative electrode sheet 20 is the first part of composite solid electrolyte membrane 31, the first part of composite solid electrolyte membrane 31 is stacked with the positive electrode sheet 10 and the negative electrode sheet 20 and are parallel to each other. The part of the composite solid electrolyte membrane 3 that protrudes from the positive electrode sheet 10 or the negative electrode sheet 20 is the second part of composite solid electrolyte membrane 32. The second part of composite solid electrolyte membrane 32 extends to the side of the lithium-ion battery 100. The second part of composite solid electrolyte membrane 32 is collected and folded in the side area of the lithium-ion battery 100 in a unified direction, which can make the overall structure of the lithium-ion battery 100 neater and facilitate subsequent processing.

As discussed above, arranging the second composite solid electrolyte membrane 32 in the side area of the lithium-ion battery 100 is beneficial to the utilization of the internal space of the battery, and at the same time will not interfere with the upper and lower planes of the battery. The overall structure of the battery is improved. At the same time, the two-part arrangement of the composite solid electrolyte membrane 3 strengthens the side strength of the battery, so that the combination between the cell body and the battery packaging aluminum foil will not be interfered. It also improves the overall structural strength and stability of the battery.

Referring to FIGS. 7 and 9, the lithium-ion battery 100 further comprises a sealing structure 65. The sealing structure 65 comprises at least one adhesive tape. Each tape extends from the lower platform to the upper platform of the lithium-ion battery 100 and is used to fix the second part of composite solid electrolyte membrane 32 folded in the side area. When the sealing structure 65 comprises a plurality of adhesive tapes, the plurality of adhesive tapes are arranged on the lithium-ion battery 100 at intervals. Specifically, the plurality of adhesive tapes are distributed around the lithium-ion battery 100 and evenly spaced from each other. Extending from the lower platform of the lithium-ion battery 100 to the upper platform, a fixed support point is provided for the second part of the solid electrolyte membrane folded in the side area.

The lithium-ion battery provided by this application comprises a composite solid electrolyte membrane, and a part of composite solid electrolyte membrane is arranged in the side area of the lithium-ion battery. This structure is conducive to the utilization of the internal space of the battery, while strengthening the side strength of the battery, so that the connection between the core body and the battery packaging aluminum foil will not be interfered, and also improving the overall structural strength and stability of the battery, making the lithium-ion battery have good cycle performance.

It is to be understood that the above-described embodiments are intended to illustrate rather than limit the present disclosure. Variations may be made to the embodiments without departing from the spirit of the present disclosure as claimed. Elements associated with any of the above embodiments are envisioned to be associated with any other embodiments. The above-described embodiments illustrate the scope of the present disclosure but do not restrict the scope of the present disclosure.

Depending on the embodiment, certain of the steps of a method described may be removed, others may be added, and the sequence of steps may be altered. The description and the claims drawn to a method may comprise some indication in reference to certain steps. However, the indication used is only to be viewed for identification purposes and not as a suggestion as to an order for the steps.

## Claims

1. A lithium-ion battery, comprising:
a positive electrode sheet;
a negative electrode sheet stacked with and spaced away from the positive electrode sheet;
a composite solid electrolyte membrane located between the positive electrode sheet and the negative electrode sheet, wherein the composite solid electrolyte membrane is a continuous membrane structure and comprises a first part of composite solid electrolyte membrane and a second part of composite solid electrolyte membrane, the first part of composite solid electrolyte membrane is stacked and parallel with the at least one positive electrode sheet and the at least one negative electrode sheet, the second part of composite solid electrolyte membrane is located on a side surface of the lithium-ion battery.

2. The lithium-ion battery of claim 1, wherein the positive electrode sheet comprises a positive electrode current collector and a positive electrode material layer disposed on the positive electrode current collector, and the first part of composite solid electrolyte membrane is located on the positive electrode material.

3. The lithium-ion battery of claim 2, further comprising a transition layer located between the first part of composite solid electrolyte membrane and the positive material layer.

4. The lithium-ion battery of claim 3, wherein the transition layer is a staggered interval structure formed by contact portions fitted into each other between the first part of composite solid electrolyte membrane and the positive material layer, a thickness of the transition layer ranges from 0.1 microns to 5.0 microns.

5. The lithium-ion battery of claim 1, wherein the negative electrode sheet comprises a negative electrode current collector and a negative electrode material layer located on the negative electrode current collector, and the first part of composite solid electrolyte membrane is located on the negative electrode material.

6. The lithium-ion battery of claim 5, further comprising a transition layer located between the first part of composite solid electrolyte membrane and the negative material layer, the transition layer is a staggered interval structure formed by contact portions fitted into each other between the first part of composite solid electrolyte membrane and the negative material layer.

7. The lithium-ion battery of claim 1, wherein the composite solid electrolyte membrane comprises a polymer material and an inorganic solid electrolyte.

8. The lithium-ion battery of claim 7, wherein the polymer material is at least one of polyvinylidene fluoride, polymethyl methacrylate and polyethylene oxide.

9. The lithium-ion battery of claim 7, wherein the inorganic solid electrolyte at least one of lithium lanthanum zirconium oxide, lithium aluminum titanium phosphate, and lithium lanthanum titanium oxide.

10. The lithium-ion battery according to any one of claims 1-9, wherein the second part of composite solid electrolyte membrane protrudes from the positive electrode sheet or the negative electrode sheet and is folded one the side surface of the lithium-ion battery.

11. The lithium-ion battery according to any one of claims 1-9, further comprising a sealing structure, wherein the sealing structure comprises at least one adhesive tape, and the lithium-ion battery defines an upper platform and a lower platform opposite to the upper platform, the at least one adhesive tape extends from the lower platform of the lithium-ion battery to the upper platform.

12. The lithium-ion battery of claim 11, wherein the sealing structure includes a plurality of adhesive tapes located around the lithium-ion battery, and each of the plurality of adhesive tapes extends from the lower platform of the lithium-ion battery to the upper platform.

13. A lithium-ion battery, comprising:
a plurality of positive electrode sheets;
a plurality of negative electrode sheets stacked with the plurality of positive electrode sheets at intervals;
at least one composite solid electrolyte membrane located between one positive electrode sheet and one negative electrode sheet, wherein the at least one composite solid electrolyte membrane is a continuous membrane structure and comprises a first part of composite solid electrolyte membrane and a second part of composite solid electrolyte membrane, the first part of composite solid electrolyte membrane is stacked and parallel with the positive electrode sheet and the negative electrode sheet, the second part of composite solid electrolyte membrane is located on a side surface of the lithium-ion battery.

14. The lithium-ion battery of claim 13, wherein an area of the at least one composite solid electrolyte membrane is larger than an area of the positive electrode sheet or the negative electrode sheet.

15. The lithium-ion battery of claim 13, further comprising a sealing structure, wherein the sealing structure comprises at least one adhesive tape, and the lithium-ion battery defines an upper platform and a lower platform opposite to the upper platform, the at least one adhesive tape extends from the lower platform of the lithium-ion battery to the upper platform.
